# EUROPÄISCHE PATENTSCHRIFT

(11) **EP 1 204 812 B1**
(45) Veröffentlichungstag und Bekanntmachung des Hinweises auf die Patenterteilung: **20.09.2006**
(21) Anmeldenummer: 00954621.9
(22) Anmeldetag: 10.08.2000
(51) Int. Cl.: F01L 1/047

(54) **VERFAHREN ZUR HERSTELLUNG EINER GEBAUTEN NOCKENWELLE UND VORRICHTUNG ZUR DURCHFÜHRUNG DIESES VERFAHRENS**
METHOD FOR THE PRODUCTION OF AN ASSEMBLED CAMSHAFT AND DEVICE FOR IMPLEMENTING SAID METHOD
PROCEDE DE REALISATION D'UN ARBRE A CAMES ASSEMBLE ET DISPOSITIF PERMETTANT LA MISE EN OUVRE DE CE PROCEDE

(30) Priorität: 16.08.1999 DE 19938791
(43) Veröffentlichungstag der Anmeldung: 15.05.2002
(73) Patentinhaber: Neumayer Tekfor GmbH, 77756 Hausach (DE)
(72) Erfinder: VOGEL, Manfred, 77876 Kappelrodeck (DE)
(74) Vertreter: von Puttkamer, Nikolaus
(86) Internationale Anmeldenummer: PCT/EP2000/007812
(87) Internationale Veröffentlichungsnummer: WO 2001/012956

(56) Entgegenhaltungen:
- US-A- 5 299 881
- US-A- 5 307 708
- PATENT ABSTRACTS OF JAPAN vol. 009, no. 317 (C-319), 12. Dezember 1985 (1985-12-12) & JP 60 152665 A (RIKEN KK), 10. August 1985 (1985-08-10)
- PATENT ABSTRACTS OF JAPAN vol. 007, no. 169 (M-231), 26. Juli 1983 (1983-07-26) & JP 58 074811 A (TOKYO SHIBAURA DENKI KK), 6. Mai 1983 (1983-05-06)

## Beschreibung

Die Erfindung betrifft ein Verfahren zur Herstellung einer gebauten Nockenwelle und eine Vorrichtung zur Durchführung des Verfahrens.

Aus der US-PS 5,299,881 oder US 5 307 708 gehen gebaute Nockenwellen hervor, bei denen die einzelnen Nocken und die entsprechende Welle zunächst in getrennten Herstellungsschritten fertig hergestellt werden und danach die Nocken mit einer speziellen Fügetechnik auf die Welle so aufgeschoben werden, daß zwischen der Welle und den Nocken eine spielfreie Passung besteht. Die vorgefertigten Nocken weisen jeweils eine Innenbohrung und wenigstens zwei axial voneinander beabstandete ringförmige Zonen auf, die durch wenigstens einen freien Raum voneinander getrennt sind, der sich in der Innenbohrung der Nocken befindet. Der Raum und die Zonen sind symmetrisch zur Mittelebene der Nocken angeordnet. Zur Herstellung der gebauten Nockenwelle werden die einzelnen Nocken auf die Welle aufgeschoben, so daß sich zwischen den genannten Zonen und dem Umfang der Welle jeweils eine Passung ergibt. Ein Problem besteht dabei darin, daß das Aufschieben der genannten Nocken relativ schwierig und problematisch ist, insbesondere dann, wenn die Nocken auf oder über die Bereiche geschoben werden, auf denen sie fixiert werden sollen. Zudem sind die Nocken selbst relativ kompliziert aufgebaut.

Die Aufgabe der vorliegenden Erfindung besteht darin, ein Verfahren zur Herstellung von gebauten Nockenwellen zu schaffen, durch das das Aufschieben der Nocken auf die entsprechende Welle verbessert wird.

Diese Aufgabe wird durch ein Verfahren zur Herstellung einer gebauten Nockenwelle gelöst, das durch die Merkmale des Patentanspruches 1 gekennzeichnet ist. Eine Fügevorrichtung zur Durchführung dieses Verfahrens weist die Merkmale des Patentanspruches 10 auf.

Der wesentliche Vorteil der vorliegenden Erfindung besteht darin, daß das Aufschieben der einzelnen Nocken auf die Welle durch eine im Bereich der Innenbohrung der Nokken in der Aufschubrichtung gesehen vordere keilförmige Schmiermittelnut bzw. -fase wesentlich erleichtert wird, weil in diese Schmiermittelnut eingebrachtes Schmiermittel infolge der keilförmigen Ausgestaltung der Nut während des Aufschiebeprozesses fortlaufend in die Innenbohrung der Nut hineingezogen wird, so daß die Reibung zwischen dem Außenumfang der Welle und dem Innenumfang der Innenbohrung der Nut erheblich verringert wird. Vorteilhafterweise kann ein Nocken beim Aufschieben auf die Welle wegen der zuvor genannten Schmierung durch die keilförmige Nut auch relativ leicht in die vorbestimmte Umfangsposition gedreht werden. Bei einer vorteilhaften Ausgestaltung der Erfindung sind neben der vorderen Schmiermittelnut weitere Schmiermittelnuten an der Innenseite des nockens vorgesehen, und zwar nicht symmtrisch zur Mittelebene des Nockens. Die Gestaltung der keilförmigen Schmiermittelnuten ist optimal.

Vorteilhafte Ausgestaltungen der vorliegenden Erfindung gehen aus den Unteransprüchen hervor.

Im folgenden werden die Erfindung und deren Ausgestaltungen im Zusammenhang mit den Figuren näher erläutert. Es zeigen:
- Figur 1: eine fertig hergestellte gebaute Nockenwelle;
- Figur 2: einen Schnitt durch eine erfindungsgemäß ausgestaltete Nocke;
- Figur 3: eine Ansicht der Nocke der Figur 2 in der Aufschubrichtung gesehen von vorne;
- Figur 4: die Anordnung einer Nocke auf einem Fixierbereich der Welle, der einen Durchmesser besitzt, der größer ist als der Durchmesser der restlichen Bereiche der Welle und
- Figuren 5 und 6: eine bevorzugte Vorrichtung zur Durchführung des erfindungsgemäßen Verfahrens.

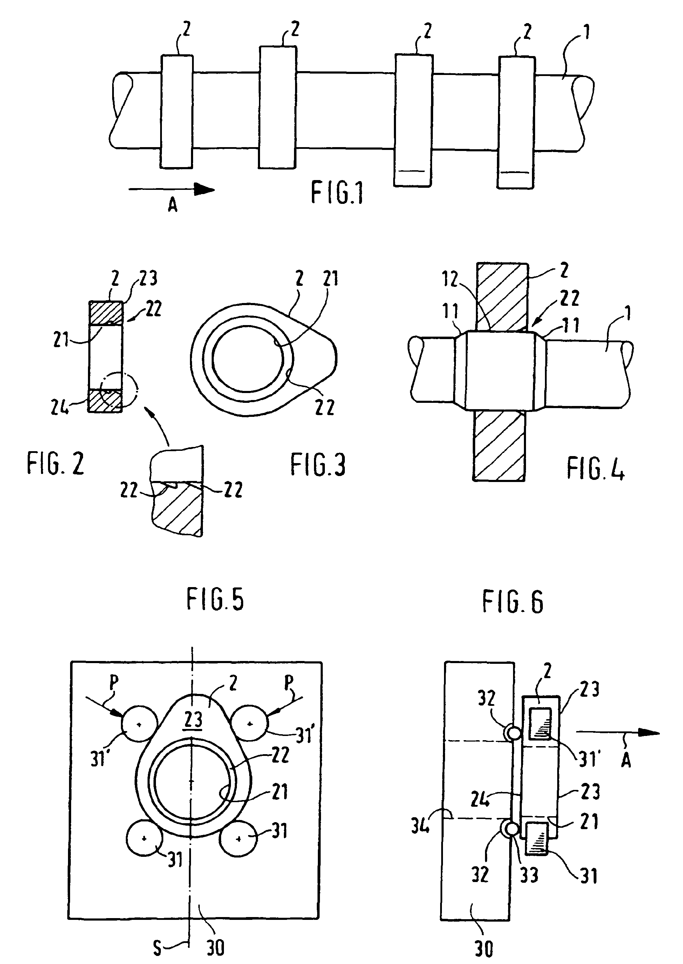

In der Figur 1 ist eine gebaute Nockenwelle dargestellt, die eine Welle 1 umfaßt, auf der Nocken 2 in vorbestimmte axiale Positionen, beispielsweise in der Aufschiebrichtung A aufgeschoben sind. Die einzelnen Nocken 2 der gebauten Nockenwelle sind auch in der Umfangsrichtung der Welle 1 gesehen in vorgegebenen Positionen angeordnet.

Aus den Figuren 2 und 3 ist erkennbar, daß die im Zusammenhang mit dem erfindungsgemäßen Verfahren angewendeten Nocken in der Aufschiebrichtung A gesehen im Bereich ihrer Vorderseite 23 wenigstens eine keilförmige und ringförmige
Schmiermittelfase bzw. -nut 22 aufweisen, die die Innenbohrung 21 umgibt und ausgehend von der Vorderseite 23 des Nockens 2 schräg nach innen bis zum Innendurchmesser der Innenbohrung 21 verläuft. Dabei kann die Schräge geradlinig oder auch bogenförmig gestaltet sein. Neben der genannten Nut 22 können eine oder mehrere weitere Nuten 22 vorgesehen sein. Diese sind jedoch nicht symmetrisch zur Längsmittelebene des Nockens 2 angeordnet, sonder zur Vorderseite 23 desselben hin orientiert. Die Schmiermittelnuten 22 können dieselbe Gestalt besitzen oder sich im Hinblick auf den Winkel der Schräge oder die Breite der Nuten unterscheiden.

Die Schmiermittelnut 22 erfüllt zwei verschiedene Funktionen. Zum einen wird in sie bei der Aufschiebeoperation ein Schmiermittel eingebracht, das während des Aufschiebens wegen der keilförmigen Beschaffenheit in der Schmiermittelnut 22 fortwährend nach innen zum Innenumfang der Innenbohrung 21 des Nockens 2 gezogen wird, so daß die Innenfläche der Innenbohrung 21 während des gesamten Aufschiebeprozesses geschmiert wird, so daß der Nocken 2 in der Aufschieberichtung A bei einer verminderten Reibung auf der Welle 1 zur vorbestimmten axialen Position verschoben werden kann.

Durch die genannte Schmierung wird auch erreicht, daß der Nocken 2 vor der Verschiebung zu seiner vorbestimmten axialen Position, während dieser Verschiebung oder nach Erreichen seiner axialen Position in der Umfangsrichtung der Welle 1 verdreht werden kann, bis er seine vorgegebene Umfangsposition erreicht.

Um nach der Anordnung des Nockens in der vorbestimmten axialen Position und der vorgegebenen Umfangsposition die durch das Schmiermittel verminderte Reibung wieder aufzuheben, wird bevorzugt ein Schmiermittel verwendet, das nach der Anordnung aller Nocken 2 in den vorbestimmten axialen Positionen und den vorgegebenen Umfangspositionen so behandelt wird, daß seine die Reibung verminderte Wirkung aufgehoben wird. Beispielsweise erfolgt dies bei Verwendung eines bestimmten Schmiermittels dadurch, daß die gebaute Nockenwelle erwärmt wird, wobei bei der Erwärmung des Schmiermittels der gewünschte reibungsvermindernde Effekt auftritt.

Durch die Schmiermittelnut 22 wird ferner erreicht, daß die Nocken 2 beim Aufsetzen auf den Umfang der Welle 1 automatisch zentriert werden. Dies ist insbesondere dann von Bedeutung, wenn die Nocken gemäß Figur 4 auf einer Welle 1 angeordnet werden, die an den vorbestimmten axialen Positionen der Nocken 2 Fixierbereiche 12 mit einem Durchmesser besitzt, der größer ist als der Durchmesser der Welle 1 in den anderen Bereichen. Beim Verschieben der Nocken 2 zu den jeweils vorbestimmten axialen Positionen dienen die Schmiermittelnuten 22 der Nocken 2 jeweils als Zentrierungshilfen. Um eine weitere bessere Zentrierung der Nocken 2 auf den Fixierbereichen 12 zu erreichen, können diese insbesondere an ihren den Nocken 2 in der Aufschubrichtung A zugewandten Seiten sogenannte Auffahrschrägen 11 aufweisen.

Im folgenden wird im Zusammenhang mit den Figuren 5 und 6 eine bevorzugte Vorrichtung zum Aufschieben der Nocken 2 in die vorbestimmten und vorgegebenen Positionen erläutert.

Beim Anbringen der Nocken 2 auf der Welle 1 ist es entscheidend, daß nicht nur die Formgenauigkeit und die axialen Positionen genau stimmen müssen, sondern es muß auch die Orientierung der Nocken 2 in der Umfangsrichtung zueinander genau passen. Dies ist mit der erfindungsgemäßen Fügevorrichtung erreichbar. Diese weist an einem vorzugsweise plattenförmigen Halteteil 30 wenigstens drei, zweckmäßigerweise jedoch wenigstens vier Rollen 31 auf, die am Umfang eines Nockens 2 angreifen können. Vorzugsweise sind zwei Rollen 31 so angeordnet, daß sie sich unterhalb des gemäß Figur 5 angeordneten Nockens 2 befinden, und zwar symmetrisch zur Symmetrielinie S des Nokkens 2 angeordnet sind. Sie stützen daher den Nocken 2 in seinem kreisrunden Bereich. Zwei weitere Rollen 31' sind oberhalb der Rollen 31 symmetrisch zur genannten Symmetrielinie S des Nockens 2 so angeordnet, daß sie an den geradlinigen Seitenflächen des Nockens 2 anliegen. Wenn nun die Rollen 31' durch eine nicht dargestellte Vorrichtung gleichmäßig in Richtung der Pfeile P gegen die geradlinigen Seitenflächen des Nockens 2 gedrückt werden , hat dies zur Folge, daß sich der Nocken 2 in dem Halteteil 30 exakt in die dargestellte Position ausrichtet, in der seine Symmetrielinie S genau auf der Symmetrielinie der sich gegenüberliegenden Rollen 31, 31 und 31', 31' liegt.

In der Halteplatte 30 befindet sich eine Öffnung 34, durch die die Welle 1 beim Fügen hindurchgeführt werden kann.

Zur Ausrichtung der Nocken 2 in der Umfangsrichtung wird entweder die Welle 1 beim Fügen in Bezug auf das Halteteil, in dem der Nocken in der gannten Position exakt gehalten wird, um einen jeweils vorgegebenen Winkel gedreht, oder wird das Halteteil 30 in Bezug auf die Welle 1 um den vorgegebenen Winkel gedreht.

Damit die Drehung des Nockens 2 in Bezug auf das Halteteil 30 möglich ist, ist in der Halteplatte 2 ein Achsiallager angeordnet, das die axiale Aufschubkraft der Halteplatte 30 aufnehmen und auf den Nocken 2 übertragen kann und das auf einem Kreisbogen angeordnete Vertiefungen 32 aufweist, in denen vorzugsweise Kugeln 33 angeordnet sind, die sich einerseits am Boden der Vertiefungen 32 und andererseits an der der Vorderseite 23 gegenüberliegenden Rückseite 24 des Nockens 2 abstützen.

Mit der erläuterten Fügevorrichtung wird wie folgt gearbeitet. Zunachst wird ein Nocken 2 in der oben beschriebenen Weise in dem Halteteil 30 angeordnet und ausgerichtet. Es wird dann die Welle 1 in Bezug auf das Halteteil 30 oder das Halteteil 30 in Bezug auf die Welle 1 so verschoben, daß das dem Nocken 2 zugewandte Ende der Innenbohrung 21 des Nockens 2 auf das Ende der Welle 1 gelangt. Im folgenden wird durch die genannte Relativbewegung zwischen Nocken 2 und Welle 1 der Nocken 2 bis zu seiner vorbestimmten axialen Position verschoben, wobei die Schmierung zur Erleichterung der Verschiebung durch das in die Nut(en) 22 eingebrachte Schmiermittel erfolgt.

Die oben beschriebene Drehung des Nockens 2 in der Umfangsrichtung erfolgt vorzugsweise vor der axialen Relativbewegung zwischen Nocken 2 und Welle 1. Es ist jedoch auch denkbar, die Drehung während der Relativbewegung, d.h. also vor Erreichen der vorbestimmten axialen Position, oder alternativ nach Ausführung der Relativbewegung und nach Erreichen der vorbestimmten axialen Position vorzunehmen.

Es wird darauf hingewiesen, daß nach dem zuvor beschriebenen Verfahren und mit der oben erläuterten Fügevorrichtung nicht nur Nocken, sondern auch andere Teile, wie zum beispiel Axiallagerringe, Winkelsensoren, Endstücke etc. auf der Welle 1 angebracht werden können, wobei diese Teile, was die Fügung anbelangt genauso ausgebildet sind, wie die Nocken 2.

Das vorliegende Verfahren kann auch so ausgeführt werden, daß die Fügevorrichtung mehrere Halteteile 30 umfaßt, in denen jeweils Nocken in vorbestimmten axialen Positionen und in vorgegebenen Umfangspositionen gehalten werden. Die in einer solchen Fügevorrichtung gehaltenen Nocken 2 können dann als ganzes auf eine Welle 1 aufgeschoben werden, oder es kann alternativ die Welle 1 in eine solche Fügevorrichtung und in die in dieser gehaltenen Nocken 2 eingeschoben werden. Alle Nocken 2 erreichen dann gleichzeitig auf der Welle 1 ihre axialen Positionen und ihre Umfangspositionen.

## Patentansprüche

1. Verfahren zur Herstellung einer gebauten Welle, insbesondere einer gebauten Nockenwelle, bei dem Teile, insbesondere Nocken (2), durch Fügeoperationen auf einer Welle (1) in vorbestimmten axialen Positionen und vorgebenen Umfangspositionen mit Reibschluß durch Preßverbund aufgebracht werden, wobei die Nocken (2) in der Vorschubrichtung der Nocken (2) oder der Welle (1) gesehen in ihrer Vorderfläche (23) eine ihre Innenbohrung (21) umgebende Nut (22) aufweisen, die im wesentlichen keilförmig ausgebildet ist und eine geradlinig oder bogenförmig in Richtung auf die Innenwandung der Bohrung (21) verlaufende Schräge aufweist, wobei
die Welle (1) im Bereich der vorbestimmten axialen Positionen der Nocken (2) Fixierbereiche (12) mit einem gegenüber den anderen Bereichen der Welle (1) vergrößerten Durchmesser aufweist, wobei die Nuten (22) der Nocken (2) beim Aufbringen der Nocken (2) auf die Fixierbereiche (12) eine Auffahrschräge bilden, **dadurch gekennzeichnet, dass**
beim Verschieben einer Nocke (2) auf der Welle (1) in die vorbestimmte axiale Position auf dem Zentrierbereich (12) und gegebenenfalls beim Verdrehen der Nocke (1) in die vorgegebene Umfangsposition ein Schmiermittel in die Nut (22) eingebracht wird, das während des Aufschiebeprozesses fortlaufend aus der Nut (22) in die Innenbohrung der Nocke (2) hineingezogen wird.

2. Verfahren nach Anspruch 1, **dadurch gekennzeichnet, dass** in die Nut (22) bei der Fügeoperation ein Schmiermittel eingebracht wird, das nach der Fügeoperation selektiv derart behandelbar ist, dass es seine reibungsvermindernde Funktion verliert.

3. Verfahren nach Anspruch 2, **dadurch gekennzeichnet, dass** das Schmiermittel nach der Fügeoperation durch Erwärmen der gebauten Nockenwelle seine reibungsvermindernde Funktion verliert.

4. Gebaute Welle, insbesondere gebaute Nockenwelle, bei der Teile, insbesondere Nocken (2), durch Fügeoperationen auf der Welle (1) in vorbestimmten axialen Positionen und vorgebenen Umfangspositionen mit Reibschluß durch Preßverbund aufgebracht sind, wobei die Nocken (2) in der Vorschubrichtung der Nocken (2) oder der Welle (1) gesehen in ihrer Vorderfläche (23) eine ihre Innenbohrung (21) umgebende Nut (22) aufweisen, die im wesentlichen keilförmig ausgebildet ist und eine geradlinig oder bogenförmig in Richtung auf die Innenwandung der Bohrung (21) verlaufende Schräge aufweist, wobei
die Welle (1) im Bereich der vorbestimmten axialen Positionen der Nocken (2) Fixierbereiche (12) mit einem gegenüber den anderen Bereichen der Welle (1) vergrößerten Durchmesser aufweist, wobei die Nuten (22) der Nocken (2) beim Aufbringen der Nocken (2) auf die Fixierbereiche (12) eine Auffahrschräge bilden, **dadurch gekennzeichnet, dass**
beim Verschieben einer Nocke (2) auf der Welle (1) in die vorbestimmte axiale Position auf dem Zentrierbereich (12) und gegebenenfalls beim Verdrehen der Nocke (1) in die vorgegebene Umfangsposition ein Schmiermittel in die Nut (22) eingebracht und in dieser enthalten ist, das während des Aufschiebeprozesses fortlaufend aus der Nut (22) in die Innenbohrung der Nocke (2) hineingezogen wurde.

5. Gebaute Welle nach Anspruch 4, **dadurch gekennzeichnet, dass** wenigstens eine weitere Schmiermittelnut neben der Schmiermittelnut (22) angeordnet ist.

6. Gebaute Welle nach Anspruch 5, **dadurch gekennzeichnet, dass** die Schmiermittelnut (22) und die wenigstens eine weitere Schmiermittelnut gleich ausgebildet sind oder sich im Hinblick auf die Winkel ihrer Schrägen und/oder bezüglich ihrer Breiten unterscheiden.

7. Gebaute Welle nach einem der Ansprüche 4 bis 6, **dadurch gekennzeichnet, dass** die Fixierbereiche (12) wenigstens an ihrer den Nocken (2) bei der Aufschiebeoperation zugewandten Seite eine Auffahrschräge (11) aufweisen.

## Claims

1. A method for producing an assembled shaft, in particular an assembled camshaft, in which parts, especially cams (2), are placed by means of joining operation onto a shaft (1) in predetermined axial positions and specified circumferential positions with friction grip due to a compression joint,
wherein the cams (2), seen in feed direction of the cams (2) or of the shaft (1) , in their front surface (23) comprise a groove (22) which surrounds their inner bore (21) and which has a substantially wedge-shaped design and comprises a linear or curved slope running in the direction of the inner wall of the bore (21),
wherein in the vicinity of the predetermined axial positions of the cams (2), the shaft (1) comprises fixing areas (12) having a diameter which is larger than the other areas of the shaft (1), wherein the grooves (22) of the cams (2) form an ascent slope when the cams (2) are placed onto the fixing areas (12),
**characterised in that** when a cam (2) is moved on the shaft (1) into the predetermined axial position on the centring region (12) and if necessary when the cam (1) is twisted into the specified circumferential position, a lubricant is introduced into the groove (22), which during the sliding process is drawn continuously out of the groove (22) into the inner bore of the cam (2).

2. Method according to claim 1, **characterised in that** during the joining operation a lubricant is inserted into the groove (22) that is treated after the joining operation selectively such that it is loosing its friction diminishing function.

3. Method according to claim 2, **characterised in that** the lubricant is loosing its friction diminishing function after the joining operation by heating the assembled shaft.

4. An assembled shaft, in particular an assembled camshaft, in which parts, especially cams (2), are placed by means of joining operations onto the shaft (1) in predetermined axial positions and specified circumferential positions with friction grip due to a compression joint,
wherein the cams (2), seen in the feed direction of the cams (2) or of the shaft (1), in their front surface (23) comprise a groove (22) which surrounds their inner bore (21) and which has a substantially wedge-shaped design and which comprises a linear or curved slope running in the direction of the inner wall of the bore (21),
wherein in the vicinity of the predetermined axial positions of the cams (2), the shaft (1) comprises fixing areas (12) having a diameter which is larger than the other areas of the shaft (1), wherein the grooves (22) of the cams (2) form an ascent slope when the cams (2) are placed onto the fixing areas (12),
**characterised in that** when a cam (2) is moved on the shaft (1) into the predetermined axial position on the centring area (12) and if necessary when the cam (1) is twisted into the specified circumferential position, a lubricant is introduced into the groove (22) and is contained therein, said lubricant having been continuously drawn out of the groove (22) into the inner bore of the cam (2) during the sliding process.

5. Assembled shaft according to claim 4, **characterised in that** there is provided at least one further groove adjacent the groove (22).

6. Assembled shaft according to claim 5, **characterised in that** the groove (22) and the at least one further groove are constructed in the same way or differ in view of the angles of their chamfers and/or in view of their widths.

7. Assembled shaft according to one of the claims 4 to 6, **characterised in that** the fixing areas (12) are provided at the side that is facing the cam (2) during the joining operation with an ascent slope (11).

## Revendications

1. Procédé de fabrication d'un arbre assemblé, notamment d'un arbre à cames assemblé, dans lequel des parties en particulier des cames (2) sont montées par des opérations d'assemblage sur un arbre (1) dans des positions axiales et dans des positions périphériques prédéfinies, avec verrouillage par friction obtenu par serrage à la presse, chaque came (2), sur sa face (23) située en avant par rapport au sens de coulissement des cames (2) ou de l'arbre (1), présentant, entourant son alésage interne (21), une rainure (22) ayant essentiellement une forme en coin, avec une pente rectiligne ou arquée s'étendant en direction de la paroi interne de l'alésage (21), étant précisé que l'arbre (1) présente dans la zone des positions axiales prédéfinies des cames (2) des zones de fixation (12) de diamètre augmenté par rapport à celui des autres zones de l'arbre (1), les rainures (22) des cames (2) formant rampes d'accès quand on monte les cames (2) sur les zones de fixation (12), **caractérisé en ce que** quand on fait coulisser une came (2) sur l'arbre (1) pour l'amener à la position axiale prédéfinie sur la zone de centrage (12) et éventuellement en faisant tourner la came (1) pour l'amener à la position périphérique prédéfinie, un agent lubrifiant est introduit dans la rainure (2) et, pendant le processus de coulissement, cet agent est entraîné en continu de la rainure (22) à l'alésage interne de la came (2).

2. Procédé selon la revendication 1, **caractérisé en ce qu'**est introduit dans le rainure (22) pendant l'opération d'assemblage un agent lubrifiant, ledit agent lubrifiant propre à un traitement selectif après l'opération d'assemblage, de sorte qu'il perd sa fonction réductrice de friction.

3. Procédé selon la revendication 2, **caracterisé en ce que**, après l'opération d'assemblage, le lubrifiant perd sa fonction réductrice de friction par chauffement de l'arbre assemblé.

4. Arbre assemblé, notamment arbre à cames assemblé, dans lequel des parties en particulier des cames (2) sont montées par des opérations d'assemblage sur un arbre (1) dans des positions axiales et dans des positions périphériques prédéfinies, avec verrouillage par friction obtenu par serrage à la presse, chaque came (2), sur sa face (23) située en avant par rapport au sens de coulissement des cames (2) ou de l'arbre (1), présentant, entourant son alésage interne (21), une rainure (22) ayant essentiellement une forme en coin, avec une pente rectiligne ou arquée s'étendant en direction de la paroi interne de l'alésage (21), étant précisé que l'arbre (1) présente dans la zone des positions axiales prédéfinies des cames (2) des zones de fixation (12) de diamètre augmenté par rapport à celui des autres zones de l'arbre (1), les rainures (22) des cames (2) formant rampes d'accès quand on monte les cames (2) sur les zones de fixation (12), **caractérisé en ce que** quand on fait coulisser une came (2) sur l'arbre (1) pour l'amener à la position axiale prédéfinie sur la zone de centrage (12) et éventuellement en faisant tourner la came (1) pour l'amener à la position périphérique prédéfinie, un agent lubrifiant est introduit dans la rainure (2) et, pendant le processus de coulissement, cet agent est entraîné en continu de la rainure (22) à l'alésage interne de la came (2).

5. Arbre assemblé selon la revendication 4, **caractérisé par** au moins une rainure (22) à lubrifiant supplémentaire disposée à côté de ladite rainure à lubrifiant (22).

6. Arbre assemblé selon la revendication 5, **caractérisé en ce que** la rainure à lubrifiant (22) et la au moins une rainure à lubrifiant supplementaire sont égales l'une à l'autre ou se distinguent l'une de l'autre par les angles d'inclination de leurs parois et/ou par leurs largeurs.

7. Arbre assemblé selon une des revendications 4 à 6, **caractérisé en ce que** les zones de fixation (12) ont une rampe d'access (11) de leur côtés tournées aux cames (2) pendant l'opération d'assemblage.
